# EUROPÄISCHE PATENTSCHRIFT

(11) **EP 0 743 009 B1**
(45) Veröffentlichungstag und Bekanntmachung des Hinweises auf die Patenterteilung: **01.12.1999**
(21) Anmeldenummer: 96107450.7
(22) Anmeldetag: 10.05.1996
(51) Int. Cl.: A22C 11/00

(54) **Vorrichtung zur Herstellung von Würsten**
Device for manufacturing sausages
Dispositif de fabrication de saucisses

(30) Priorität: 18.05.1995 DE 29508293 U
(43) Veröffentlichungstag der Anmeldung: 20.11.1996
(73) Patentinhaber: Albert Handtmann Maschinenfabrik GmbH & Co. KG, D-88396 Biberach (DE)
(72) Erfinder: Schliesser, Gerhard, 88489 Wain (DE); Burger, Karl, 88456 Ingoldingen-Muttensweiler (DE)
(74) Vertreter: Grünecker, Kinkeldey, Stockmair & Schwanhäusser Anwaltssozietät

(56) Entgegenhaltungen:
- EP-A- 0 179 528
- EP-A- 0 482 368
- DE-C- 3 300 012
- FR-A- 1 296 109
- FR-A- 1 483 818
- US-A- 1 368 407

## Beschreibung

Die Erfindung betrifft eine Vorrichtung zum Zuführen von in Ketten zusammenhängend hergestellten Wurststrängen zu einem Rauchstock, mit einer Transportvorrichtung mit umlaufenden Transporthaken, an die die Würste übergeben werden.

Vorrichtungen zum Zuführen von in Ketten zusammenhängend hergestellten Wurststrängen zu einem Rauchstock sind in vielfältigen Ausführungsformen bekannt, so z.B. aus dem europäischen Patent 0482 368 desselben Anmelders. Die aus dem Füllrohr einer Portionier- und Füllmaschine austretende Brätmenge wird in einen Darm überführt, der dabei vom Füllrohr abgezogen wird. Je nach Portionsgröße können Einschnürungen durch Aktivierung eines Abdrehgetriebes erzeugt werden. Die so entstehenden Wurstketten werden schlaufenförmig an eine Transportvorrichtung übergeben, um dann von einem Rauchstock übernommen zu werden. Auf dem Rauchstock hängend können die Wurstschleifen in die Räucherkammer zur weiteren Behandlung der Würste überführt werden.

Wie in diesem Patent beschrieben, weist die Transportvorrichtung ein in einer horizontalen Ebene umlaufendes Transportband auf, an dem die Transporthaken in einstellbarem Abstand zueinander hängen und die ankommenden Wurstschlaufen zum maschinenabgewandten Ende der Transportvorrichtung hin weiterfördern. Dabei können sie gleichzeitig über einen Rauchstock geführt werden, es ist aber auch möglich, den Rauchstock von Hand in die gebildeten Wurstschleifen einzuschieben.

Am Anfang und Ende eines Wurststranges ist es erforderlich, daß dort die Darmenden verschlossen werden. Zu diesem Zweck werden Verschließeinrichtungen wie Handclipper oder auch stationäre Clipper eingesetzt, wobei die Schwierigkeit besteht, daß die Wurstschlaufen dann zu diesen Verschließern verbracht werden müssen.

Insbesondere bei der Erzeugung von Würsten mit Naturdarm werden die Verschließvorrichtungen - im folgenden kurz als Clipper bezeichnet - häufiger benötigt, weil dann ein Verklippen nicht nur am Anfang und Ende einer Darmlänge erforderlich ist, sondern häufig auch bei Wurstplatzern zwischendurch an den Einschnürungen rechts und links von der Stelle, an der eine Darmbeschädigung aufgetreten ist, vorgenommen werden muß.

Beim Herstellen von Würsten in Naturdärmen ist das Verschließen daher besonders aufwendig und daher zeitraubend.

Aufgabe der Erfindung ist es, eine Vorrichtung der eingangs genannten Art bereitzustellen, bei der das Verschließen insbesondere im Bereich aufgeplatzter Stellen, aber auch am Anfang und Ende eines Wurststranges, insbesondere eines Naturdarmewurststranges vereinfacht ist.

Gelöst wird diese Aufgabe dadurch, daß auf der Transportvorrichtung eine Vorrichtung zum Verschließen zumindest über einen Teil der Längserstreckung der Transportvorrichtungs verschiebbar gelagert angeordnet ist.

Mit dieser Maßnahme wird der Clipper möglichst dicht an die Stelle verbracht, an der ein Verschließen erforderlich ist. Durch die Anordnung auf der Transportvorrichtung derart, daß eine Verschiebung des Clippers möglich ist, kann der Clipper möglichst dicht an den Anfang oder das Ende eines Wurststranges verfahren werden. Der Wurststrang kann dann, ohne insgesamt aus der Transportvorrichtung entnommen werden zu müssen, an den entsprechenden Stellen einfach durch Clipsen verschlossen werden.

In vorteilhafter Ausgestaltung der Erfindung ist die Vorrichtung zum Clippen in einer der üblichen Arbeitshöhe einer stehenden Person (80 cm - 140 cm) entsprechenden Höhe auf einem Träger, um den die Transporthaken an einem Transportband geführt endlos umlaufen, angeordnet. Damit ist ein einfacher Zugriff und ein ergonomisches Arbeiten möglich.

In weiterer Ausgestaltung der Erfindung sind etwa in Arbeitshöhe der Vorrichtung zum Verschließen zur Aufnahme eines Rauchstocks beabstandete Haltearme an der Transportvorrichtung vorhanden. Damit können die Wurstschlaufen zunächst auf den Rauchstock überführt und dann der Rauchstock entnommen und auf die Haltearme gehängt werden, wobei der so behängte Rauchstock dann in unmittelbarer Nähe zum Clipper zu liegen kommt und ein einfaches Verclippen möglich ist.

Der Abstand zwischen einem auf den Haltearmen aufgenommenen Rauchstock und der Clippervorrichtung beträgt vorzugsweise etwa 1o bis 25 cm, so daß man mit einer üblichen Wurstlänge den Abstand zwischen Rauchstock und Clipper überwinden kann. Auch kann der kürzeste Abstand zwischen Transporthaken und Clipper entsprechend kurz gewählt werden, so daß auch ein Verclippen von den Transporthaken aus möglich ist.

Die Erfindung wird im folgenden anhand des in der Zeichnung dargestellten Ausführungsbeispiels weiter erläutert und beschrieben.

Die einzige Figur der Zeichnung zeigt eine schematische Seitenansicht auf eine erfindungsgemäße Wurstverarbeitungsvorrichtung. In der Wurst- und Portioniermaschine 1 wird die Wurst in an sich bekannter Weise über ein Füllrohr 3 ausgestoßen, auf dem eine Darmraupe 13 aufgezogen ist. Über ein Abdrehgetriebe 2 und einen Bremsring 4 kann das Wurstbrät portionsweise in den Darm eingefüllt werden. Die hinter dem Bremsring 4 entstehenden zusammenhängenden Wurstketten werden mittels Übergabemittel 7 und 8 an die Transportvorrichtung 5 übergeben. Eine solche Transportvorrichtung zum Zwecke des Weitertransportes der Wurstschlaufen ist z.B. in der europäischen Patentanmeldung 482 368 beschrieben, auf die diesbezüglich ausdrücklich verwiesen wird.

Die Wurst hängt schlaufenartig über die einzelnen Transporthaken 6, deren Abstand einstellbar ist. Die Transporthaken werden über das endlos umlaufende Transportband 14 in der Zeichnung nach links transportiert. Erfindungsgemäß ist nun auf der Transportvorrichtung zumindest über einen Teil der Längserstreckung der Transportvorrichtung verschiebbar die Clipvorrichtung 9 gelagert. Die Clipvorrichtung besteht aus einem handelsüblichen Clipper, wie er im Fleisch verarbeitenden Gewerbe zum Herstellen von Verschlüssen bei Würsten eingesetzt wird. Dieser Clipper ist auf Führungsschienen 10 auf der Oberseite der Transportvorrichtung in einer Höhe h verschiebbar angeordnet, und kann so in dem dargestellten Ausführungsbeispiel zwischen den beiden Haltearmen 12 frei verschoben werden.

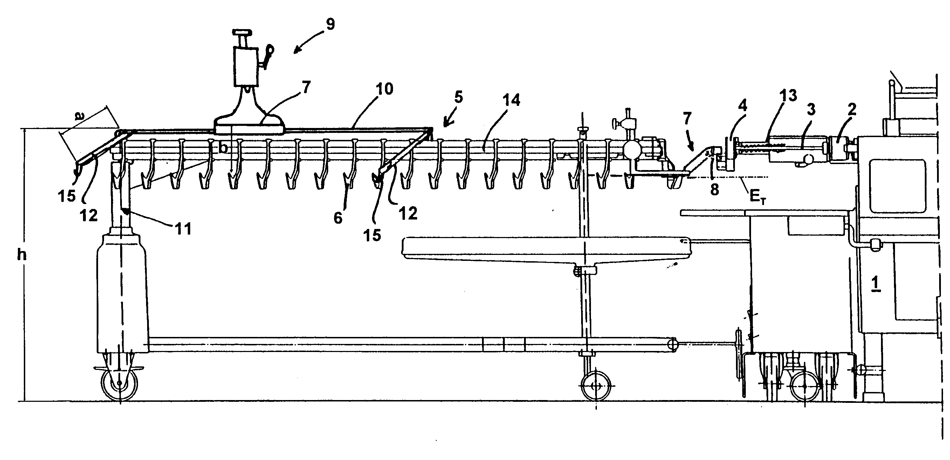

Die Haltearme 12, die anders als der Rest der Zeichnung in der Figur 1 perspektivisch auf der Betrachterseite vorstehend dargestellt sind, dienen dazu, mit ihren Haken 15 einen mit Wurstschlaufen behängten Rauchstock aufzunehmen. Der Abstand a, der durch die Länge der Haltearme 12 definiert ist, ist so gewählt, daß im Betrieb ohne weiteres von einer hängenden Wurstschlaufe eine einzelne Wurst ergriffen und bis zur Verschließfläche F des Clippers 9 gezogen werden kann, so daß - ohne daß eine ganze Wurstkette bewegt werden muß - ein Verclippen einfach möglich ist.

Die Höhe h, in der die Clipvorrichtung angeordnet ist, entspricht einer üblichen Arbeitshöhe von ca. 1m bis 1,40 m, so daß ein bequemes Arbeiten möglich ist.

Mit dieser Vorrichtung kann nun wie folgt gearbeitet werden:

Die Maschine 1 stößt in an sich bekannter Weise mit einer bestimmten Frequenz in zusammenhängenden Wurstketten gebildete Würste aus, die durch geeignete Koordination der Bandantriebsgeschwindigkeit der Transportvorrichtung mit der Maschinengeschwindigkeit automatisch schlaufenartig auf den Haken 6 der Transportvorrichtung zu liegen kommen (s. hierzu die bereits erwähnte europäische Patenanmeldung 482 368) und werden von der Transportvorrichtung in der Zeichnung nach links transportiert. Bei diesem Transport kann entweder automatisch, wie in der erwähnten europäischen Patentanmeldung beschrieben, bereits ein Rauchstock in die sich bildenden Schlaufen eingeführt werden, es ist aber auch möglich, von Hand den Rauchstock in die gebildeten Schlaufen einzufädeln. Mit dem Rauchstock werden die Wurstschlaufen dann auf die Haltearme 12 in die Haken 15 eingehängt und können dann von einer Bedienungsperson ausgerichtet und durch entsprechendes Positionieren der Clipvorrichtung 9 an den Enden oder auch an Stellen, an denen ein Verschließen z.B. nach einem Darmplatzer notwendig ist, verfahren werden, so daß ein einfaches Verclippen möglich ist. Auch ist denkbar, die Wurstschleifen, solange sie noch auf den Haken 6 hängen, bereits durch Anheben der entsprechenden Wurstabschnitte zum Clipper 9 hin zu verschließen, was insbesondere dann einfach gelingt, wenn der kürzeste Abstand zwischen Transporthakenbahn und Clipper zwischen 10 und 25 cm gewählt wird.

Die Anordnung der Clipvorrichtung 9 auf der Transportvorrichtung ermöglicht somit eine sehr einfache Handhabung, was insbesondere auch bei der Verarbeitung von in Naturdärmen abzufüllenden Würsten große Vorteile bringt. Gerade dort muß häufiger aufgrund der häufig auftretenden Darmplatzer von Hand ein Verclippen vorgenommen werden, was mit der erfindungsgemäßen Anordnung der Clipvorrichtung 9 ohne weiteres möglich ist und somit eine bedeutende Arbeitserleichterung darstellt.

## Patentansprüche

1. Vorrichtung zum Zuführen von in Ketten zusammenhängend hergestellten Wurststrängen zu einem Rauchstock, mit einer Transportvorrichtung mit umlaufenden Transporthaken, an die die Würste übergeben werden, **dadurch gekennzeichnet**, daß auf der Transportvorrichtung (5) eine Vorrichtung zum Verschließen (9) zumindest über einen Teil der Längserstreckung der Transportvorrichtung verschiebbar gelagert angeordnet ist.

2. Vorrichtung nach Anspruch 1, **dadurch gekennzeichnet**, daß die Vorrichtung zum Verschließen (9) in einer der üblichen Arbeitshöhe einer stehenden Person, d. h. 80 cm bis 140 cm, entsprechenden Höhe (h) auf einem Träger (11), um den die Transporthaken (6) an einem Transportband (14) geführt endlos umlaufen, angeordnet ist.

3. Vorrichtung nach Anspruch 1 oder 2, **dadurch gekennzeichnet**, daß etwa in Arbeitshöhe der Vorrichtung zum Verschließen (9) zur Aufnahme eines Rauchstocks beabstandete Haltearme (12) angeordnet sind.

4. Vorrichtung nach Anspruch 3, **dadurch gekennzeichnet**, daß der Abstand (a) zwischen einem an den Haltearmen (12) aufgenommenen Rauchstock und der Verschließfläche (7) der Verschließvorrichtung (9) etwa 10 bis 25 cm beträgt.

5. Vorrichtung nach einem der vorangegangenen Ansprüche, **dadurch gekennzeichnet**, daß der kürzeste Abstand (b) zwischen Transporthakenebene (E_{T}) und der Verschließfläche (F) der Verschließvorrichtung (9) etwa 10 bis 25 cm beträgt.

## Claims

1. A device for supplying sausage strings made coherently in chains to a smoke stick, comprising a transportation device including rotating transportation hooks to which the sausages are transferred, **characterized in** that a device for closing (9) is arranged on said transportation device (5) to be movably supported at least over part of the longitudinal extension of said transportation device.

2. A device according to claim 1, **characterized in** that said closing device (9) is arranged at a height (h) corresponding to the standard working height of a standing person, i.e. 80 cm to 140 cm, on a support (11) around which said transportation hooks (6) rotate continuously, being guided on a transportation belt (14).

3. A device according to claim 1 or 2, **characterized in** that spaced-apart holding arms (12) are arranged approximately at the working height of said closing device (9) for receiving a smoke stick.

4. A device according to claim 3, **characterized in** that the distance (a) between a smoke stick received on said holding arms (12) and the closing surface (7) of said closing device (9) is about 10 to 25 cm.

5. A device according to any one of the preceding claims, **characterized in** that the shortest distance (b) between transportation hook plane (E_{T}) and closing surface (F) of said closing device (9) is about 10 to 25 cm.

## Revendications

1. Dispositif d'amenée de chapelets de saucisses fabriquées en continu en chaîne à une barre à fumer avec un dispositif de transport avec des crochets de transport circulants auxquels sont accrochés les saucisses, caractérisé en ce qu'un dispositif de fermeture (9) est disposé sur le dispositif de transport (5) sur paliers de manière coulissante au moins sur une partie de l'étalement en longueur du dispositif de transport.

2. Dispositif selon la revendication 1, caractérisé en ce que le dispositif de fermeture (9) est disposé à une hauteur (h) correspondant à la hauteur de travail habituelle d'une personne en position debout, c'est-à-dire 80 à 140 cm, sur un support (11), autour duquel les crochets de transport (6) guidés circulent sans fin sur une bande transporteuse (14).

3. Dispositif selon la revendication 1 ou 2, caractérisé en ce que des bras de support (12) distancés sont disposés approximativement à hauteur de travail du dispositif de fermeture (9) pour la saisie d'une barre à fumer.

4. Dispositif selon la revendication 3, caractérisé en ce que la distance (a) entre une barre à fumer saisie sur les bras de support (12) et la surface de fermeture (7) du dispositif de fermeture (9) est d'environ 10 à 25 cm.

5. Dispositif selon l'une quelconque des revendications précédentes, caractérisé en ce que la distance la plus courte (b) entre le niveau des crochets de transport (E_{T}) et la surface de fermeture (F) du dispositif de fermeture (9) est d'environ 10 à 25 cm.
